# EUROPÄISCHE PATENTSCHRIFT

(11) **EP 2 125 427 B1**
(45) Veröffentlichungstag und Bekanntmachung des Hinweises auf die Patenterteilung: **22.09.2010**
(21) Anmeldenummer: 08715919.0
(22) Anmeldetag: 21.02.2008
(51) Int. Cl.: B60P 1/44

(54) **BEWEGBARE PLATTFORM**
MOVABLE PLATFORM
PLATEFORME MOBILE

(30) Priorität: 26.02.2007 DE 102007009611; 08.05.2007 DE 202007006772 U
(43) Veröffentlichungstag der Anmeldung: 02.12.2009
(73) Patentinhaber: Peter Maier Leichtbau GmbH, 78224 Singen (DE)
(72) Erfinder: SEUSSLER, Jürgen, 78256 Steisslingen (DE); MELLES, Árpád, H-8200 Veszprem (HU)
(74) Vertreter: Weiss, Peter
(86) Internationale Anmeldenummer: PCT/EP2008/001357
(87) Internationale Veröffentlichungsnummer: WO 2008/104317

(56) Entgegenhaltungen:
- EP-A- 0 479 652
- EP-A- 1 097 838
- WO-A-85/01706
- DE-A1- 2 717 380
- DE-A1- 2 717 460
- DE-U1- 9 302 213
- GB-A- 2 395 051
- JP-A- 2000 016 173

## Beschreibung

Die Erfindung betrifft eine bewegbare Plattform, insbesondere Ladebordwand, mit einer Oberfläche zur Übernahme von Personen, Ladegütern od. dgl..

### Stand der Technik

Bewegbare Plattformen sind in vielen Bereichen des täglichen Lebens bekannt. Sie dienen beispielsweise der Beförderung bzw. dem Übergang von Personen, wie Aufzüge, schwenkbare Brücken usw. und vor allem der Übergabe von Lasten, Ladegüter usw.. Letztere sind unter dem Begriff Ladebordwand erfasst und können an Rampen, Fahrzeugen od. dgl. angeordnet werden.

Sie werden an Gebäuden oder Gebäudebestandteilen, aber vor allem auch an Fahrzeugen angebracht und dienen meist zum Anheben und Absenken von Lasten. Beispielsweise bei Lastkraftwagen oder Schiffen dienen sie auch zum Verschliessen von Ladeluken.

Um den heutigen Sicherheitsanforderungen zu genügen, müssen derartige Plattformen mit einer Beleuchtung versehen sein, die nicht nur Nachts eine gewisse Sicherheit bittet. Auch tagsüber sind derartige Plattformen beispielsweise mit der Warnblinkanlage des Fahrzeuges verbunden, so dass die Beleuchtung mit Einschalten der Warnblinkanlage ebenfalls wirksam wird. Eine derartige Beleuchtung ist in der DE 298 08 424 U gezeigt. Dabei befinden sich die entsprechenden Lichtquellen an den Aussenkanten bzw. Aussenflächen der Ladebordwand selbst oder sind in der Ladebordwand integriert. Zu diesem Zweck muss die Ladebordwand entsprechend ausgeschnitten bzw. ausgefräst werden, was einen erheblichen Arbeitsaufwand bedeutet.

Des weiteren ist aus der DE 20 2005 015 591 U1 eine Ladebordwand mit einer absenkbaren Ladebordwand mit integrierter Beleuchtung bekannt, wobei ein Lichtblock, insbesondere in der Aussenkante der Ladebordwand integriert ist. In der Ladebordwand selbst befindet sich eine Lichtquelle, die von der Fahrzeugelektrik mit Strom versorgt wird.

In der Vergangenheit wurden derartige Ladebordwände meist hydraulisch betrieben. In Zukunft wird dies auch auf elektrischem Wege geschehen, wie beispielsweise in der DE 10 2006 000 994 A1 oder DE 2717460 beschrieben. Gleichgültig, ob hydraulisch, elektrischen oder anders betrieben, für die Tätigkeit der Ladebordwand ist in jedem Fall einer Steuerung notwendig, die in der Regel von einem Mitarbeiter zu bedienen ist. Bei einem Lastkraftwagen beispielsweise befinden sich entsprechende Handschalter seitlich am Aufbau. Bei vielen Ladebordwänden sind auch Trittschalter in die Oberfläche eingelassen. Vor allem diese Trittschalter sind Wettereinflüssen und einem erheblichen Verschleiss ausgesetzt. Ferner müssen entsprechende Ausnehmungen in die Oberfläche der Ladebordwand eingeformt werden. Hierzu ist ein zusätzlicher Arbeitsvorgang notwendig, der die Herstellung der Ladebordwand verkompliziert und darüber hinaus verteuert.

### Aufgabe

Aufgabe der vorliegenden Erfindung ist es, die Steuerung der Bewegung von derartigen Plattformen zu verbessern und unempfindlicher auszugestalten. Gleichzeitig soll die Herstellung von Plattformen sowie deren Handhabung unkompliziert und einfach sein.

### Lösung der Aufgabe

Zur Lösung der Aufgabe führt, dass in oder unter einer Oberfläche zumindest ein Sensor angeordnet ist, der mit einem Signalgeber berührungslos in Wirkverbindung steht.

Dabei muss es sich nicht um die Oberfläche der Plattform selbst handeln, die entsprechende Schalteinrichtung könnte auch beispielsweise in der Ladepritsche des Fahrzeuges oder auch einer Fahrzeugwand vorgesehen sein. Unter Oberfläche ist zu verstehen, dass zwischen Sensor und Signalgeber eine Trennung vorgesehen ist, durch die insbesondere der Sensor geschützt wird. Der Schaltvorgang erfolgt damit berührungslos. Der Sensor kann so untergebracht werden, dass er nur wenig Witterungseinflüssen und nur einem geringen Verschleiss unterliegt. Der Sensor könnte auch in der Oberfläche sitzen und nur durch eine geringe Schicht der Oberfläche abgedeckt sein. Ein verschlechtertes Ausführungsbeispiel der Erfindung betrifft auch die Anordnung des Sensors in der Oberfläche, wobei beispielsweise eine Stirnfläche des Sensors direkt in der Ebene der Oberfläche liegt. Hindurch ist der Sensor zwar weitestgehend, aber nicht gänzlich geschützt.

Bevorzugt ist der Signalgeber auf der Oberfläche selbst angeordnet ist. Dies muss aber nicht sein, denkbar ist auch ein Signalgeber, der von dem Mitarbeiter mitgeführt wird. Es ist sogar denkbar, das der Signalgeber beispielsweise im Schuh des Mitarbeiters integriert ist.

Wichtig ist, dass der Sensor auf den Signalgeber berührungslos reagiert. Dies kann beispielsweise auf der Basis von induktiven, magnetischen, kapazitiven, optoelektronischen und auf Ultraschall basierenden Prinzipien erfolgen. Im Stand der Technik sind berührungslos arbeitende Sensoren bekannt, beispielsweise Näherungsschalter, Hall-Sensoren od. dgl..

Bei der vorliegenden Erfindung wird allerdings bevorzugt, dass der Signalgeber zumindest in Teilbereichen einen Abstand von der Oberfläche einhält und somit der Oberfläche fest zugeordnet ist. Hierdurch wird gewährleistet, dass der Signalgeber dem Mitarbeiter auch immer, wenn nötig, zur Verfügung steht.

Bevorzugt wird ferner ein auf mechanischer Basis arbeitender Signalgeber bzw. Sensor. Im geeignetsten Fall genügt es, wenn der Abstand zwischen dem Signalgeber und Sensor mechanisch verändert und damit der Schaltvorgang ausgelöst wird. Das bedeutet, dass der Signalgeber am einfachsten auf der Oberfläche nahe dem Sensor befestigt wird und ein flexibles Element aufweist, dessen Abstand im Verhältnis zum Sensor verändert werden kann. Natürlich sollte dieser Abstand auch nach Beendigung des Schaltvorgangs wiederhergestellt werden, weshalb für den Signalgeber ein entsprechendes rückstellendes Material verwendet wird.

Der Sensor kann sein Signal über Kabel oder bevorzugt über Funk an eine entsprechende Steuerung weitergegeben. Hier soll die Erfindung keiner Begrenzung unterliegen.

Die heutigen Plattformen bestehen bevorzugt aus profiliertem Metall, insbesondere aus stranggepressten Aluminiumprofilen. Diese bilden Rinnen, Kanäle oder sogar Hohlkammern aus, in welche der Sensor eingesetzt werden kann, so dass er bevorzugt allseits geschützt ist.

Die vorliegende Erfindung umfasst auch ein Verfahren zum Betreiben einer Plattform, wobei Bewegungen der Plattform durch Schaltvorgänge gesteuert werden, die zumindest zum Teil berührungslos erfolgen.

In einem bevorzugten Ausführungsbeispiel soll zur Auslösung eines Schaltvorganges ein Abstand zwischen einem Signalgeber und einem Sensor verändert werden. Dies bewirkt eine Veränderung eines elektrischen oder magnetischen Feldes durch eine Bordwandoberfläche hindurch, wodurch ein entsprechend berührungslos arbeitender Sensor angesprochen wird.

Desweiteren soll eine Beleuchtungseinrichtung als selbstständige Einheit der Plattform zugeordnet sein. Das heisst, die Plattform selbst braucht nicht mehr ausgeschnitten oder ausgefräst zu werden, sondern die Beleuchtungseinrichtung wird auf oder an oder in eine Nische der Plattform eingesetzt. Dies erspart aufwendige Arbeitsschritte und trägt zu einer Verbilligung der Plattform bei.

Ein weiterer Gedanke der vorliegenden Erfindung, für den auch selbstständig Schutz begehrt wird, ist, dass der Beleuchtungseinrichtung ein Neigungssensor zugeordnet wird. Eine derartige Beleuchtungseinrichtung wird dann von der Steuerung des Fahrzeuges unabhängig, so dass ein wesentlicher Teil der Verkabelung entfällt. Der Neigungssensor ist so ausgestaltet, dass er Leuchtelemente der Beleuchtungseinrichtung erst einschaltet, wenn die Ladebordwand einen vorbestimmten Öffnungswinkel überschritten hat. Ebenso schaltet er die Leuchtelemente nach einer Unterschreitung eines vorbestimmten Öffnungswinkels ab.

Obwohl ein Anschluss der Beleuchtungseinrichtung an die Fahrzeugelektronik möglich bleibt, ist in einem bevorzugten Ausführungsbeispiel der Erfindung vorgesehen, der Beleuchtungseinrichtung eine eigene Stromquelle, beispielsweise eine Batterie zuzuordnen. Als Stromquelle können aber auch Akkus oder sonstige bekannte Stromquellen dienen. Diese Stromquellen sind so ausgestaltet, dass ein Fahrer sie selbst austauschen kann. Heutige Batterien z.B. mit 3V halten bei einer Versorgung einer LED während 2 Std. pro Tag ca. 2 Jahre. Kurz vor ihrem Ende sollte dem Fahrer ein Signal über den Ablauf gegeben werden.

Wichtig erscheint, dass in der Beleuchtungseinrichtung selbst eine Steuerung für die Leuchtelemente integriert ist. Damit wird die Beleuchtungseinrichtung unabhängig von der Steuerung bspw. des Fahrzeugs, was sich vor allem beim Zusammenwirken mit dem Neigungssensor positiv auswirkt.

Die gesamte selbstständige Einheit der Beleuchtungseinrichtung soll bevorzugt in einem Gehäuse integriert sein. Das heisst, Leuchtelemente, Steuerung, Batterie und ggf. Neigungssensor sind in einem Gehäuse zusammengefasst und werden auf oder an der Plattform angebracht. Die Anbringung kann auf beliebige Art und Weise erfolgen. Gedacht ist hier sogar daran, die Einheit auf der Plattform festzukleben.

Schutz wird auch für die Beleuchtungseinrichtung selbst begehrt, bei der sich die Leuchtelemente und zumindest die Steuerung für die Leuchtelemente in einem Gehäuse befinden, das auf eine Plattform auf - oder an die Plattform ansetzbar ist.

Bevorzugt integriert befindet sich in der Beleuchtungseinrichtung der oben erwähnte Neigungssensor, wobei auch hier denkbar ist, dass er als separte Einheit nur der Beleuchtungseinrichtung zugeordnet wird.

Die erfindungsgemässe Plattform trägt auch erheblich zur Sicherheit von Personen bei. Durch die berührungslose Bedienung des Sensors über den Signalgeber ist eine dauernde Anwesenheit einer Person notwendig. Ohne die Person wird der Vorgang sofort gestoppt. Bei einem Öffnen der Plattform wird infolge des Neigungssensors ohne ein Zutun einer Person die Beleuchtung eingeschaltet.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Draufsicht auf einen Teil einer erfindungsgemässen Ladebordwand;
Figur 2 einen Querschnitt durch den Teil der Ladebordwand gemäss Figur 1 entlang Linie II-II;
Figur 3 eine perspektivische Ansicht eines Eckbereiches einer erfindungsgemässen Ladebordwand;
Figur 4 eine Draufsicht auf eine Beleuchtungseinrichtung gemäss der vorliegenden Erfindung.

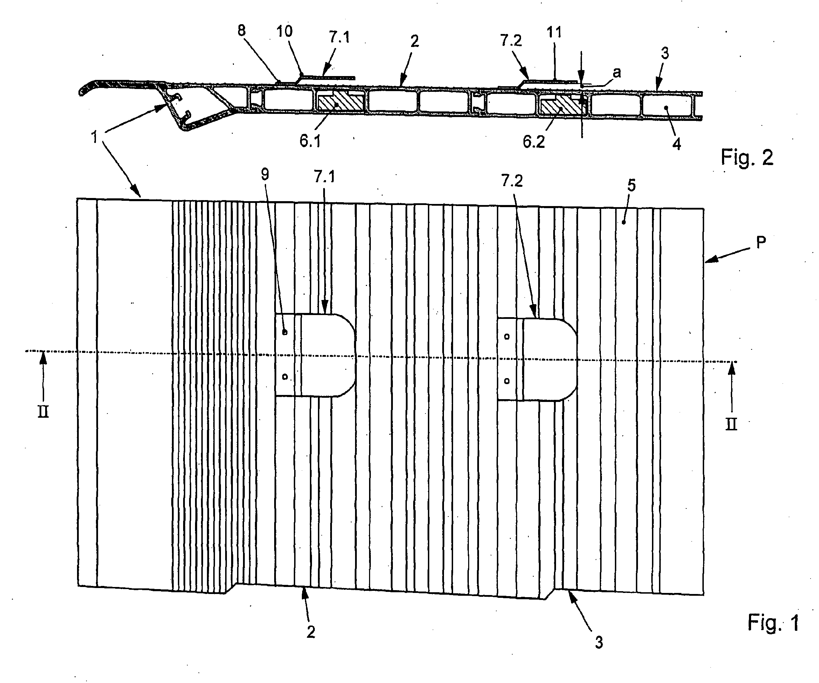

In Figur 1 ist von einer erfindungsgemässen Ladebordwand P nur ein Ausschnitt gezeigt. Erkennbar ist ein Anschlussprofil 1 sowie zwei daran anschliessende Bordwandprofile 2 und 3, die miteinander über nut/federähnliche Eingriffe miteinander verbunden sind. Die Profile 1, 2 und 3 bestehen im wesentlichen aus stranggepresstem Aluminium und weisen Hohlkammern 4 auf. Zusammen bilden sie eine Oberfläche 5, auf der beispielsweise beliebige Ladegüter abgestellt werden können.

In zwei der gezeigten Hohlkammern 4 befinden sich Sensoren 6.1 und 6.2, wobei sie in den Kammern 4 geschützt und von der Oberfläche 5 abgedeckt sind.

Auf der Oberfläche 3 sitzen zwei Signalgeber 7.1 und 7.2 auf, wobei diese gekröpft ausgebildet sind. Sie liegen mit einem Anschlussstreifen 8 direkt auf der Oberfläche 3 auf und sind mit der Oberfläche 3 über Nieten 9 verbunden. Nach einer Abkröpfung 10 übergreift eine Trittplatte 11 die Oberfläche 3 und hält von dieser einen Abstand a ein.

Die Funktionsweise dieser Teile der Erfindung ist folgende:
Zum Beladen oder Entladen eines nicht näher gezeigten Ladegutes wird die Ladebordwand P in die in Figur 2 gezeigte waagrechte Gebrauchslage geschwenkt. Nun wird das Ladegut beispielsweise in einem Ladewagen auf die Oberfläche 3 der Ladebordwand P aufgefahren. Jetzt soll einer Steuerung der Ladebordwand P ein Signal zum Anheben oder Absenken gegeben werden. Hierzu tritt ein entsprechender Mitarbeiter auf die Trittplatte 11 des Signalgebers 7.1 oder 7.2, wodurch der Abstand a zwischen der Trittplatte 11 und der Oberfläche 3 verändert wird. Gleichzeitig wird natürlich auch ein Abstand zwischen der Trittplatte 11 und dem Sensor 6.1 oder 6.2 verändert. Da dieser Sensor 6.1 oder 6.2 berührunglos arbeitet, d. h., beispielsweise auf eine Änderung eines elektrischen oder magnetischen Feldes zwischen der Trittplatte 11 und dem Sensor 6.1 oder 6.2 reagiert, wird ein Schaltvorgang ausgelöst.

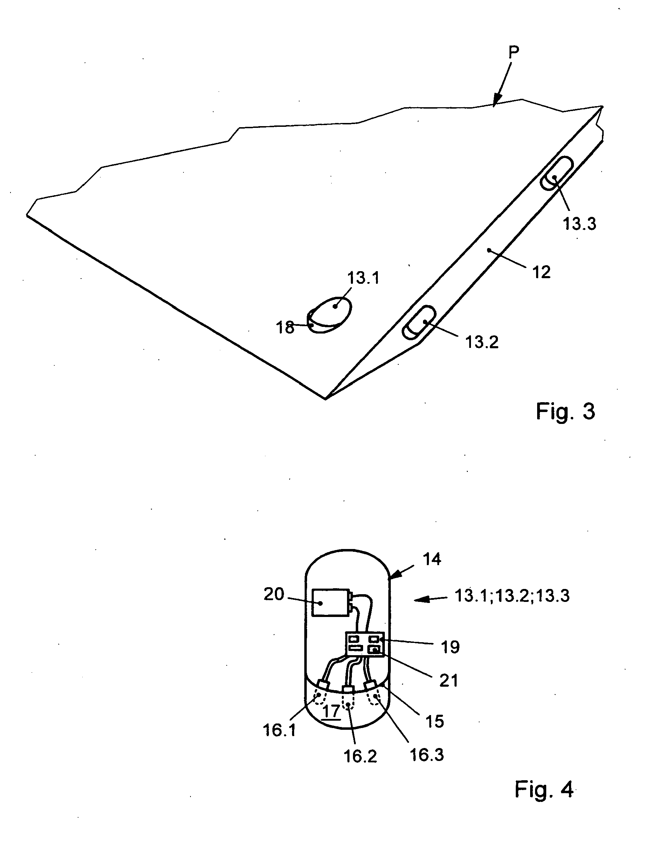

Gemäss Figur 3 ist von der erfindungsgemässen Ladebordwand P ein Eckbereich angedeutet. Auf der Ladebordwand P und an einer Randkante 12 befinden sich Beleuchtungseinrichtungen 13.1, 13.2 und 13.3, die im wesentlichen ähnlich ausgestaltet sind. Zu ihrer Beschreibung wird auf Figur 4 Bezug genommen.

Jede Beleuchtungseinrichtung 13.1, 13.2 und 13.3 weist ein Gehäuse 14 auf, das beliebig ausgestaltet sein kann. In dem Gehäuse 14 befindet sich eine Wand 15, in der drei Leuchtdioden 16.1, 16.2 und 16.3 als Leuchtelemente stecken. In Gebrauchslage ist ein Raum 17 vor der Wand 15 bzw. den Leuchtelementen 16.1 bis 16.3 mit einer durchscheinenden Abdeckung 18 versehen.

Jedes Leuchtelement 16.1, 16.2 und 16.3 ist mit einer Steuerung 19 verbunden. Die Steuerung 19 wird wiederum von einer Batterie 20 mit Energie versorgt. Bevorzugt ist ferner auf der Steuerung 19 ein Neigungssensor 21 vorgesehen, der jedoch auch unabhängig von der Steuerung 19 angeordnet sein kann.

Die Funktionsweise der vorliegenden Erfindung ist folgende:
Beim Herstellen der erfindungsgemässen Ladebordwand werden die Beleuchtungseinrichtungen 13.1 bis 13.3 an einer gewünschten Stelle auf der Ladebordwand P als Stand-Alone-Elemente angeordnet. Beispielsweise können sie dort verschraubt oder auch aufgeklebt sein. Die integrierten Neigungssensoren 21, sind so eingestellt, dass sie eine Verbindung zwischen Batterie 20 und Leuchtelementen 16.1 bis 16.3 erst dann zulassen, wenn die Ladebordwand P einen bestimmten Öffnungswinkel überschritten hat. Dies geschieht völlig unabhängig von einer Elektrik ausserhalb einer Beleuchtungseinrichtung bspw. einer Elektrik eines Fahrzeuges.

Vorzugsweise ist der Steuerung 19 ein Neigungssensor 21 zugeordnet.

Vorzugsweise befindet sich der Neigungssensor 21 ebenfalls in dem Gehäuse 14.

Ferner wird Schutz für ein Verfahren zum Betreiben einer Plattform, insbesondere Ladebordwand beanspruch, deren Bewegungen durch Schaltvorgänge gesteuert werden, wobei zumindest ein Teil der Schaltvorgänge berührungslos erfolgt, dadurch gekennzeichnet, dass zur Auslösung eines Schaltvorgangs ein Abstand a zwischen einem Signalgeber 7.1, 7.2 und einem Sensor 6.1, 6.2 verändert wird.

Vorzugsweise erfolgt ein Schaltvorgang durch Veränderung eines elektrischen oder magnetischen Feldes durch eine Bordwandoberfläche 5 hindurch erfolgt.

### Bezugszeichenliste

| | | | | | |
|---|---|---|---|---|---|
| 1 | Anschlussprofil | 34 | | 67 | |
| 2 | Bordwandprofil | 35 | | 68 | |
| 3 | Bordwandprofil | 36 | | 69 | |
| 4 | Hohlkammer | 37 | | 70 | |
| 5 | Oberfläche | 38 | | 71 | |
| 6 | Sensor | 39 | | 72 | |
| 7 | Signalgeber | 40 | | 73 | |
| 8 | Anschlussstreifen | 41 | | 74 | |
| 9 | Niet | 42 | | 75 | |
| 10 | Abkröpfung | 43 | | 76 | |
| 11 | Trittplatte | 44 | | 77 | |
| 12 | Randkante | 45 | | 78 | |
| 13 | Beleuchtungseinrichtung | 46 | | 79 | |
| 14 | Gehäuse | 47 | | | |
| 15 | Wand | 48 | | | |
| 16 | Leuchtelement | 49 | | a | Abstand |
| 17 | Raum | 50 | | | |
| 18 | Abdeckung | 51 | | | |
| 19 | Steuerung | 52 | | | |
| 20 | Batterie | 53 | | | |
| 21 | Neigungssensor | 54 | | | |
| 22 | | 55 | | | |
| 23 | | 56 | | | |
| 24 | | 57 | | | |
| 25 | | 58 | | P | Ladebordwand |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Bewegbare Plattform, insbesondere Ladebordwand, mit einer Oberfläche (5) zur Übernahme von Personen, Ladegütern od. dgl., wobei in oder unter einer Oberfläche zumindest ein Sensor (6.1, 6.2) angeordnet ist, der mit einem Signalgeber (7.1, 7.2) berührungslos in Wirkverbindung steht,
**dadurch gekennzeichnet,**
**dass** die Oberfläche (5) Teil eines Profils (1, 2, 3) ist, wobei der Sensor (6.1, 6.2) in einer Profilkammer (4) sitzt.

2. Plattform nach Anspruch 1, **dadurch gekennzeichnet, dass** das Profil (1, 2, 3) ein stranggepresstes Aluminiumprofil ist.

3. Plattform nach wenigstens einem der Ansprüche 1 oder 2, **dadurch gekennzeichnet, dass** der Sensor (6.1, 6.2) ein Näherungssensor ist

4. Plattform nach wenigstens einem der Ansprüche 1 bis 3, **dadurch gekennzeichnet, dass** der Signalgeber (7.1, 7.2) auf der Oberfläche (5) angeordnet ist.

5. Plattform nach wenigstens einem der Ansprüche 1 bis 4, **dadurch gekennzeichnet, dass** der Signalgeber (7.1, 7.2) zumindest in Teilbereichen einen Abstand (a) von der Oberfläche (5) einhält.

6. Plattform nach Anspruch 5, **dadurch gekennzeichnet**, das der Abstand (a) veränderbar ist.

7. Plattform nach wenigstens einem der Ansprüche 1 bis 6, **dadurch gekennzeichnet, dass** der Signalgeber (7.1, 7.2) auf der Oberfläche (5) aufgenietet ist.

8. Plattform nach wenigstens einem der vorherigen Ansprüche, **dadurch gekennzeichnet, dass** eine Beleuchtungseinrichtung (13.1,13.2,13.3) als selbstständige Einheit der Plattform zugeordnet ist.

9. Plattform nach Anspruch 8 **dadurch gekennzeichnet, dass** der Beleuchtungseinrichtung (13.1,13.2,13.3) ein Neigungssensor (21) zugeordnet ist.

10. Plattform nach Anspruch 8 oder 9, **dadurch gekennzeichnet, dass** in der Beleuchtungseinrichtung (13.1,13.2,13.3) zumindest eine Batterie (20) zur Versorgung von Leuchtelementen (16.1,16.2,16.3) angeordnet ist.

11. Plattform nach wenigstens einem der Ansprüche 8 bis 10, **dadurch gekennzeichnet, dass** in der Beleuchtungseinrichtung (13.1,13.2,13.3) eine Steuerung (19) für die Leuchtelemente (16.1,16.2,16.3) vorgesehen ist.

12. Plattform nach wenigstens einem der Ansprüche 8 bis 11, **dadurch gekennzeichnet, dass** Leuchtelemente (16.1,16.2,16.3), Steuerung (19), Batterie (20) und gegebenenfalls Neigungssensor (21) in einem Gehäuse (14) angeordnet sind.

13. Plattform nach wenigstens einem der Ansprüche 8 bis 12, **dadurch gekennzeichnet, dass** die Beleuchtungseinrichtung (13.1, 13.2, 13.3) als selbstständige Einheit auf, unter und/oder seitlich an die Ladebordwand (P) ansetzbar ist.

14. Beleuchtungseinrichtung für eine Plattform nach wenigstens einem der Ansprüche 1 bis 13, **dadurch gekennzeichnet, dass** sich Leuchtelemente (16.1, 16.2, 16.3) und eine Steuerung (19) für die Leuchtelemente (16.1,16.2,16.3) in einem Gehäuse (14) befinden, welches der Plattform (P) aufsetzbar oder ansetzbar ist.

15. Beleuchtungseinrichtung nach Anspruch 14, **dadurch gekennzeichnet, dass** der Steuerung (19) eine eigene Stromversorgung zugeordnet ist, die sich ebenfalls in dem Gehäuse (14) befindet.

## Claims

1. A movable platform, in particular a tail lift, having a surface (5) for receiving people, loads or the like, wherein in or below a surface there is arranged at least one sensor (6.1, 6.2) in an operative connection in a contactless manner with a signal generator (7.1, 7.2), **characterised in that** the surface (5) is part of a shaped part (1, 2, 3), wherein the sensor (6.1, 6.2) is located in a shaped-part chamber (4).

2. A platform according to claim 1, **characterised in that** the shaped part (1, 2, 3) is an extruded shaped part made of aluminium.

3. A platform according to at least one of claims 1 and 2, **characterised in that** the sensor (6.1, 6.2) is a proximity sensor.

4. A platform according to at least one of claims 1 to 3, **characterised in that** the signal generator (7.1,7.2) is arranged on the surface (5).

5. A platform according to at least one of claims 1 to 4, **characterised in that**, the signal generator (7.1, 7.2) maintains, at least in partial regions, a distance (a) from the surface (5).

6. A platform according to claim 5, **characterised in that** the distance (a) can be altered.

7. A platform according to at least one of claims 1 to 6, **characterised in that** the signal generator (7.1, 7.2) is riveted on the surface (5).

8. A platform according to at least one of the preceding claims, **characterised in that** an illumination device (13.1, 13.2, 13.3) is associated with the platform as an independent unit.

9. A platform according to claim 8, **characterised in that** an inclination sensor (21) is associated with the illumination device (13.1, 13.2, 13.3).

10. A platform according to claim 8 or 9, **characterised in that** at least one battery (20) for supplying luminous elements (16.1, 16.2, 16.3) is arranged in the illumination device (13.1, 13.2, 13.3).

11. A platform according to at least one of claims 8 to 10, **characterised in that** a control device (19) for the luminous elements (16.1, 16.2, 16.3) is provided in the illumination device (13.1, 13.2, 13.3).

12. A platform according to at least one of claims 8 to 11, **characterised in that** the luminous elements (16.1, 16.2, 16.3), the control device (19), the battery (20) and optionally the inclination sensor (21) are arranged in a housing (14).

13. A platform according to at least one of claims 8 to 12, **characterised in that** the illumination device (13.1, 13.2, 13.3) can, as an independent unit, be attached to the tail lift (P) in a manner so as to be thereon, therebelow and/or on the side thereof.

14. An illumination device for a platform according to at least one of claims 1 to 13, **characterised in that** luminous elements (16.1, 16.2, 16.3) and a control device (19) for the luminous elements (16.1, 16.2, 16.3) are located in a housing (14) which can be mounted on or attached to the platform (P)

15. An illumination device according to claim 14, **characterised in that** the control device (19) has its own associated current supply likewise located in the housing (14).

## Revendications

1. Plateforme mobile, en particulier paroi de plateau de chargement, avec une surface (5) destinée à recevoir des personnes, des produits à charger ou autres, dans ou sous une surface étant disposé au moins un capteur (6.1, 6.2) qui est en communication de fonctionnement sans contact avec un capteur de signal (7.1, 7.2),
**caractérisée par le fait**
**que** la surface (5) fait partie d'un profilé (1, 2, 3), le capteur (6.1, 6.2) se situant dans une chambre de profilé (4).

2. Plateforme selon la revendication 1, **caractérisée par le fait que** le profilé (1, 2, 3) est un profilé d'aluminium extrudé.

3. Plateforme selon au moins l'une des revendications 1 ou 2, **caractérisée par le fait que** le capteur (6.1, 6.2) est un capteur de proximité.

4. Plateforme selon au moins l'une des revendications 1 à 3, **caractérisée par le fait que** le capteur de signal (7,1, 7.2) est disposé sur la surface (5).

5. Plateforme selon au moins l'une des revendications 1 à 4, **caractérisée par le fait que** le capteur de signal (7.1, 7.2) respecte, au moins dans des zones en profondeur, une distance (a) par rapport à la surface (5).

6. Plateforme selon la revendication 5, **caractérisée par le fait que** la distance (a) est variable.

7. Plateforme selon au moins l'une des revendications 1 à 6, **caractérisée par le fait que** le capteur de signal (7.1, 7.2) est riveté sur la surface (5).

8. Plateforme selon au moins l'une des revendications précédentes, **caractérisée par le fait qu'**un dispositif d'éclairage (13.1, 13.2, 13.3) est associé comme unité autonome à la plateforme.

9. Plateforme selon la revendication 8, **caractérisée par le fait qu'**au dispositif d'éclairage (13.1, 13.2, 13.3) est associé un capteur d'inclinaison (21).

10. Plateforme selon la revendication 8 ou 9, **caractérisée par le fait que** dans le dispositif d'éclairage (13.1, 13.2, 13.3) est disposée au moins une batterie (20) destinée à alimenter des éléments d'éclairage (16.1, 16.2, 16.3).

11. Plateforme selon au moins l'une des revendications 8 à 10, **caractérisée par le fait que** dans le dispositif d'éclairage (13.1, 13.2, 13.3) est prévue une commande (19) pour les éléments d'éclairage (16.1,16.2,16.3).

12. Plateforme selon au moins l'une des revendications 8 à 11, **caractérisée par le fait que** les éléments d'éclairage (16.1, 16.2, 16.3), la commande (19), la batterie (20) et éventuellement le capteur d'inclinaison (21) sont disposés dans un boîtier (14).

13. Plateforme selon au moins l'une des revendications 8 à 12, **caractérisée par le fait que** le dispositif d'éclairage (13.1, 13.2, 13.3) peut être placé comme unité autonome sur, au-dessous et/ou latéralement à la paroi de plateau de chargement (P).

14. Dispositif d'éclairage pour une plateforme selon au moins l'une des revendications 1 à 13, **caractérisé par le fait que** les éléments d'éclairage (16.1, 16.2, 16.3) et une commande (19) pour les éléments d'éclairage (16.1, 16.2, 16.3) se trouvent dans un boîtier (14) qui peut être placé sur ou à la plateforme (P).

15. Dispositif d'éclairage selon la revendication 14, **caractérisée par le fait qu'**à la commande (19) est associée une alimentation de courant propre qui se trouve également dans le boîtier (14).
